# EUROPEAN PATENT APPLICATION

(11) **EP 3 266 886 A1**
(43) Date of publication of application: **10.01.2018**
(21) Application number: 16758954.8
(22) Date of filing: 02.03.2016
(51) Int. Cl.: C22C 1/08, C22C 21/00, H01G 9/04

(54) **PROCESS FOR PRODUCING POROUS ALUMINUM OBJECT**

(30) Priority: 02.03.2015 JP 2015040435; 02.03.2015 JP 2015040437
(71) Applicant: Showa Denko K.K., Tokyo 105-8518 (JP)
(72) Inventor: SAKAGUCHI Masashi, Tokyo 105-8518 (JP); KUROZUMI Tadatoshi, Tokyo 105-8518 (JP); NISHIMORI Hideki, Sakai-shi Osaka 590-8576 (JP)
(74) Representative: Hoffmann Eitle
(86) International application number: PCT/JP2016/056410
(87) International publication number: WO 2016/140261

(57) **Abstract**

Provided is a method of producing a porous aluminum object having a large surface area. The method of producing a porous aluminum object according to the present invention includes: a step of producing an aluminum alloy cast body having a solidified structure including an α-Al phase 11 and a second phase 12 formed so as to be continuously intertwined with the α-Al phase by casting and solidifying an aluminum alloy; and a step of producing a porous aluminum object having a large number of cavities communicating from the surface to an inside by bringing the aluminum alloy cast body as a precursor into contact with an elution solution capable of eluting the second phase to elute the second phase 12 of the solidified structure in the precursor.

## Description

### Field of the Invention

The present invention relates to a process for producing a porous aluminum object suitably used as an electrode material for use in an aluminum electrolytic capacitor, an aluminum solid electrolytic capacitor, etc., and its related technique thereof.

### Background Technique

An aluminum electrolytic capacitor and an aluminum solid electrolytic capacitor are relatively inexpensive and can obtain high capacity, and therefore they are widely used for home electric appliances such as personal computers and televisions and for electric appliances mounted on vehicles. An aluminum electrolytic capacitor is generally produced by winding an anode foil and a cathode foil via a separator to form a capacitor element, impregnating the capacitor element with an electrolyte, storing it in a case or the like, and sealing it. For example, to an anode foil, an oxidized coating film layer is formed by subjecting a foil of valve action metal such as aluminum to a surface enlargement treatment by chemical or electrochemical etching and subjecting this surface enlargement treated foil to a chemical conversion treatment.

In a capacitor, for the purpose of improving the capacitance which is one of the most important performances thereof, a large number of techniques have been conventionally proposed. For example, based on techniques relating to the development of aluminum foil materials as described in Patent Documents 1 and 2 and techniques related to the development of etching treatment technologies as described in Patent Document 3, various approaches to surface enlargement treatments have been made to achieve high capacity.

### Prior Art

### Patent Document

Patent Document 1: Japanese Unexamined Patent Application Publication No. 2006-169629
Patent Document 2: Japanese Unexamined Patent Application Publication No. 2007-146301
Patent Document 3: Japanese Unexamined Patent Application Publication No. 2001-244153
Patent Document 4: Japanese Patent Laying-Open No. 2006-302917
Patent Document 5: Japanese Patent Laying-Open No. S63-62890
Patent Document 6: Japanese Unexamined Patent Application Publication No. 2006-22365

### SUMMARY OF THE INVENTION

### Problems to be Solved by the Invention

However, the growth of high capacity of aluminum electrolytic capacitors by the techniques described in Patent Documents 1 to 3 has been slowed down in recent years, and it is becoming difficult to greatly increasing the electrostatic capacity by continuation of conventional techniques.

On the other hand, for the purpose of greatly increasing the capacity in an aluminum electrolytic capacitor, a technology of injecting a valve action metal powder to an anode foil as disclosed in Patent Document 4, a technique using the printing method disclosed in Patent Document 5 in order to arrange etching positions regularly, and a technique using lithography as disclosed in Patent Document 6 have been proposed. However, any techniques disclosed in Patent Documents 4 to 6 have problems such as a high cost, and have not been put to practical use.

The disclosed embodiments of this disclosure have been developed in view of the above-mentioned and/or other problems in the related art. The disclosed embodiments of this disclosure can significantly improve upon existing methods and/or apparatuses.

The present invention has been made in view of the above problems, and aims to provide a method of producing a porous aluminum object and related technique thereof capable of producing the porous aluminum object at low cost without requiring a complicated process and greatly improving electrostatic capacity when the produced aluminum electrolytic capacitor is used as an anode body of an aluminum electrolytic capacitor due to a sufficiently enlarged surface area.

The other purposes and advantages of some embodiments of the present invention will be made apparent from the following preferred embodiments.

### Means for Solving the Problems

In order to attain the aforementioned objects, the present invention has the following structure as a gist.
[1] A method of producing a porous aluminum object, comprising:
   a step of producing an aluminum alloy cast body having a solidified structure including an α-Al phase and a second phase formed so as to be continuously intertwined with the α-Al phase by casting solidification of an aluminum alloy; and
   a step of producing an aluminum porous body having a large number of cavities communicating from a surface of the aluminum porous body to an inside thereof by bringing the aluminum alloy cast body as a precursor into contact with an elution solution capable of eluting the second phase to elute the second phase of the solidified structure in the precursor.
[2] The method of producing a porous aluminum object according to the aforementioned Item [1], wherein the α-Al phase contains a dendrite.
[3] The method of producing a porous aluminum object as recited in the aforementioned Item [1] or [2], wherein
   the aluminum alloy as the precursor is composed of an Al-X based alloy in which "X" as an additive component is added to "Al" as a principal component,
   the "X" is an element exhibiting an eutectic reaction to the "Al", and
   the Al-X based alloy as the precursor is an Al based alloy having a hypoeutectic composition in which an additive amount of the "X" is equal to or less than an eutectic point.
[4] The method of producing a porous aluminum object as recited in the aforementioned Item [3],
   wherein the "X is a metal less noble than the "Al".
[5] The method of producing a porous aluminum object as recited in the aforementioned Item [4],
   wherein the "X" is Mg.
[6] The method of producing a porous aluminum object as recited in any one of the aforementioned Items [1] to [5],
   wherein the elution solution is an acid aqueous solution.
[7] The method of producing a porous aluminum object as recited in the aforementioned Item [6],
   wherein the elution solution is an acidic aqueous solution containing at least one of nitric acid, sulfuric acid, and hydrochloric acid.
[8] A method of producing an electrode material for a capacitor, comprising:
   a step of producing an aluminum alloy cast body having a solidified structure including an α-Al phase and a second phase formed so as to be continuously intertwined with the α-Al phase by casting solidification of an aluminum alloy; and
   a step of producing an aluminum porous body having a large number of cavities communicating from a surface of the aluminum porous body to an inside thereof by bringing the aluminum alloy cast body as a precursor into contact with an elution solution capable of eluting the second phase to elute the second phase of the solidified structure in the precursor.
[9] The method of producing an electrode material for a capacitor as recited in the aforementioned Item [8],
   wherein the α-Al phase contains a dendrite.
[10] The method of producing an electrode material for a capacitor as recited in the aforementioned Item [8] or [9], wherein
   the aluminum alloy as the precursor is composed of an Al-X based alloy in which "X" as an additive component is added to "Al" as a principal component,
   the "X" is an element exhibiting an eutectic reaction to the "Al", and
   the Al-X based alloy as the precursor is an Al based alloy having a hypoeutectic composition in which an additive amount of the "X" is equal to or less than an eutectic point.
[11] The method of producing an electrode material for a capacitor as recited in the aforementioned Item [10],
   wherein the "X" is a metal less noble than the "Al".
[12] The method of producing an electrode material for a capacitor as recited in the aforementioned Item [11],
   wherein the "X" is Mg.
[13] The method of producing an electrode material for a capacitor as recited in any one the aforementioned Items [8] to [12],
   wherein the elution solution is an acid aqueous solution.
[14] The method of producing an electrode material for a capacitor as recited in the aforementioned Item [13],
   wherein the elution solution is an acidic aqueous solution containing at least one of nitric acid, sulfuric acid, and hydrochloric acid.
[15] A method of producing an electrode material for a capacitor characterized by subjecting a porous aluminum object obtained by the production method as recited in any one of the aforementioned Items [1] to [7] to a chemical conversion treatment to produce the electrode material for a capacitor.
[16] A method of producing a capacitor characterized in that a capacitor is produced by using an electrode material for a capacitor obtained by the production method as recited in any one of the aforementioned Items [8] to [15].
[17] A method of producing a capacitor characterized in that a capacitor in which the electrode material for a capacitor obtained by the production method as recited in the aforementioned Item [15] is used as an anode material is produced.
[18] A porous aluminum object obtained by the production method as recited in any one of the aforementioned Items [1] to [7].
[19] An electrode material for a capacitor obtained by the production method as recited in any one of the aforementioned Items [8] to [15].
[20] A capacitor obtained by the production method as recited in the aforementioned Item [16] or [17].
[21] A method of producing a porous aluminum object having a large number of cavities communicating from a surface of the porous aluminum object to an inside thereof, comprising:
   a step of producing a precursor of a solidified structure configured by a cast body of an Al-X based alloy in which "X" as an additive component is added to "Al" and having an α-Al phase and a second phase formed so as to be intertwined with the α-Al phase;
   a step of producing an aluminum intermediate having a metal structure including a remaining phase corresponding to the α-Al phase and an elution phase in which "X" in the second phase is replaced with a bath component "Y" having a melting point lower than that of the "Al-X based alloy" by immersing the precursor in a molten metal bath having the bath component "Y" to elute the "X" and replace the "X" with the "Y"; and
   a step of eluting the elution phase in the aluminum intermediate with an elution solution capable of eluting the "Y".
[22] The method of producing a porous aluminum object as recited in the aforementioned Item [21],
   wherein the α-Al phase contains a dendrite.
[23] The method of producing a porous aluminum object as recited in the aforementioned Item [21] or [22], wherein
   the "X" is an element exhibiting an eutectic reaction to the "Al", and
   the Al-X based alloy as the precursor is an Al based alloy having a hypoeutectic composition in which an additive amount of the "X" is within a range of an eutectic point or less.
[24] The method of producing a porous aluminum object as recited in the aforementioned Item [23],
   wherein the "X" is Mg.
[25] The method of producing a porous aluminum object as recited in any one of the aforementioned Items [21] to [24],
   wherein the bath component "Y" is an element of a type different from the "X" and is at least one element selected from Bi and In.
[26] The method of producing a porous aluminum object as recited in any one of the aforementioned Items [21] to [25],
   wherein the elution solution is an acid aqueous solution.
[27] The method of producing a porous aluminum object as recited in the aforementioned Item [26],
   wherein the elution solution is an aqueous solution containing nitric acid.
[28] A method of producing an electrode material for a capacitor having a large number of cavities communicating from a surface of the electrode material to an inside thereof, comprising:
   a step of producing a precursor of a solidified structure configured by a cast body of an Al-X based alloy in which "X" as an additive component is added to "Al" and having an α-Al phase and a second phase formed so as to be intertwined with the α-Al phase;
   a step of producing an aluminum intermediate having a metal structure including a remaining phase corresponding to the α-Al phase and an elution phase in which "X" in the second phase is replaced with a bath component "Y" having a melting point lower than that of the "Al-X based alloy" by immersing the precursor in a molten metal bath having the bath component "Y" to elute the "X" and replace the "X" with the "Y"; and
   a step of eluting the elution phase in the aluminum intermediate with an elution solution capable of eluting the "Y".
[29] The method of producing an electrode material for a capacitor as recited in the aforementioned Item [28],
   wherein the α-Al phase contains a dendrite.
[30] The method of producing an electrode material for a capacitor as recited in the aforementioned Item [28] or [29], wherein
   the "X" is an element exhibiting an eutectic reaction to the "Al", and
   the Al-X based alloy as the precursor is an Al based alloy having a hypoeutectic composition in which an additive amount of the "X" is equal to or less than an eutectic point.
[31] The method of producing an electrode material for a capacitor as recited in the aforementioned Item [30], wherein the "X" is Mg.
[32] The method of producing an electrode material for a capacitor as recited in any one of the aforementioned Items [28] or [31],
   wherein the bath component "Y" is an element of a type different from the "X" and is at least one element selected from Bi and In.
[33] The method of producing an electrode material for a capacitor as recited in any one of the aforementioned Items [28] or [32],
   wherein the elution solution is an acid aqueous solution.
[34] The method of producing a porous aluminum object as recited in the aforementioned Item [33],
   wherein the elution solution is an aqueous solution containing nitric acid.
[35] A method of producing an electrode material for a capacitor characterized by producing an electrode material for a capacitor by subjecting a porous aluminum object obtained by the production method as recited in any one of the aforementioned Items [21] to [27] to a chemical conversion treatment.
[36] A method of producing a capacitor characterized by producing a capacitor using an electrode material for a capacitor obtained by the production method as recited in any one of the aforementioned Items [28] to [35].
[37] A method of producing a capacitor characterized by producing a capacitor in which an electrode material for a capacitor obtained by the production method as recited in the aforementioned Item [35] is used as an anode material.
[38] A porous aluminum object characterized by being obtained by the production method as recited in any one of the aforementioned Items [21] to [27].
[39] An electrode material for a capacitor characterized by being obtained by the production method as recited in any one of the aforementioned Items [28] to [35].
[40] A capacitor characterized by being obtained by the production method as recited in the aforementioned Item [36] or [37].

### Effects of the Invention

According to the production method of the present invention, a porous aluminum object having a sufficient surface area can be obtained easily and at low cost. When the obtained porous material is used as an anode body of an aluminum capacitor, the capacitance can be greatly increased.

### BRIEF DESCRIPTION OF THE DRAWINGS

FIG. 1A is a cross-sectional view schematically showing an aluminum electrolytic capacitor obtained in a first embodiment of the present invention.
FIG. 1B is a cross-sectional view schematically showing an aluminum electrolytic capacitor which is a modified example obtained in the first embodiment.
FIG. 1C is an optical micrograph showing a cross-section of a solidified structure in a porous aluminum object obtained in Example 1-1 of the first embodiment.
FIG. 2A is a cross-sectional view schematically showing an aluminum electrolytic capacitor obtained in the first embodiment of the present invention.
FIG. 2B is a cross-sectional view schematically showing an aluminum electrolytic capacitor which is a modified example obtained in the second embodiment.
FIG. 2C is an optical micrograph showing a cross-section of a solidified structure in a precursor of a porous material obtained in Example 2-1 of the second embodiment.
FIG. 2D is an SEM photograph showing a cross-section of a replica of a porous material obtained in Example 2-2 of the second embodiment.

### EMBODIMENTS FOR CARRYING OUT THE INVENTION

### <First Embodiment>

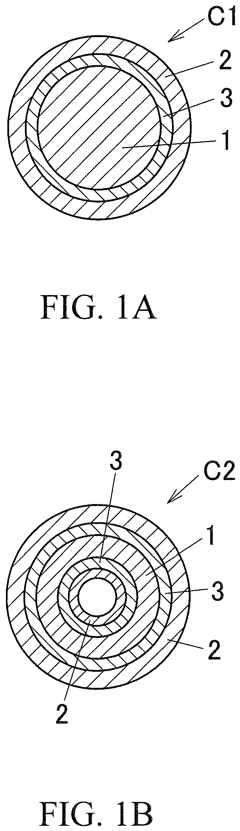

FIG. 1A is a cross-sectional view schematically showing an aluminum electrolytic capacitor C1 obtained according to the present invention. As shown in the figure, the capacitor C1 includes a columnar anode material 1 functioning as an anode, a sheet-like or film-like separator 3 wound on the outer periphery of the anode material 1, and a foil-like cathode body 2 wound on the outer periphery of the separator 3 and functioning as a cathode. Note that in some case, the separator is not used depending on the structure of the capacitor.

Conventionally well-known materials are used for the separator 3 and the cathode material 2. On the other hand, a material specific to this embodiment is used for the anode material 1 as will be described later.

In general, an aluminum electrolytic capacitor is formed by sandwiching a dielectric film made of an aluminum oxide formed on an anode material of aluminum between an anode and a cathode opposed to the anode.

An aluminum electrolytic capacitor can be produced by forming a dielectric film on an anode material of a porous aluminum object according to the present invention and placing a separator impregnated with an electrolyte serving as a cathode on the dielectric film.

For the separator, any known materials such as a cellulose porous membrane can be used.

The electrolyte may be any known electrolytes. The electrolyte is generally composed of a cation component, an anion component, and a solvent. As the anion component, weak acids such as boric acid and carboxylic acid can be exemplified, and as the cation component, organic bases such as ammonia and amine can be exemplified. As the solvent, ethylene glycol and γ-butyrolactone can be exemplified. As the cathode, a conventional surface enlargement treated Al foil or the like can be used.

The anode material 1 obtained by the present invention is composed of a porous aluminum object (porous material). In this porous aluminum object, the precursor is an aluminum alloy cast body molded by casting solidification. By eluting (etching) the required part of the precursor, a porous aluminum object having a large number of cavities (pores) communicating from the surface of the porous aluminum object to the inside thereof is obtained.

The aluminum alloy as the precursor can be expressed as an Al-X based alloy in which "X" as an additive component (additive element) is added to Al (aluminum) as a principal component (principal element) as will be described later.

The solidified structure of the precursor includes an α phase (that is, α-Al phase) composed of a primary crystal and a second phase having an eutectic formed so as to be continuously intertwined with the α phase. The primary crystal is a crystal initially produced from a molten metal in casting solidification. The second phase includes eutectic of Al and the additive element "X". The second phase is substantially and entirely connected. However, an isolated second phase may remain within a range that does not impair the effects of the present invention.

The content rate (mass%) of the additive component "X" in the second phase is larger than the content rate in the α phase. Further, as the additive component "X", a metal less noble than Al, that is, a metal having a standard electrode potential in an aqueous solution lower than that of Al may be used.

When a precursor is brought into contact with a solution capable of eluting the additive component "X", the additive component "X" is preferentially eluted. As a result, at least a part, preferably all, of the second phase is eluted while remaining the α phase. With this, a large number of cavities (pores) communicating from the surface to the inside are formed in the precursor. Thus, a porous aluminum object of this embodiment is obtained.

As the additive component "X", Mg can be suitably used because Mg has a melting point close to the melting point of Al and therefore is easy to handle. The additive component "X" is not limited to one kind, and two or more kinds may be added.

The Al-X based alloy constituting the precursor can also be regarded as an Al-based alloy and having a hypoeutectic composition in which the additive amount of "X" is equal to or less than the eutectic point. In the case of a hypoeutectic composition, an Al-rich alloy phase is crystallized in the solidified cell constituting the α phase, and in the final solidified part of the solidified cell formed on the outer periphery of the α phase, an alloy phase (second phase) containing a large amount of the additive component "X" is crystallized, and therefore the second phase is preferentially eluted with an elution solution. Therefore, it is possible to assuredly form desired cavities.

Although the α phase may sometimes be slightly eluted, it does not become a problem to the extent that the communicated cavities are formed and the shape of the porous material is maintained.

In cases where the precursor is a hypereutectic composition in which the additive amount of "X" exceeds the eutectic point, the primary crystal becomes a crystallized product of the additive component "X" or a crystallized product of an alloy phase containing a large amount of the additive component "X", and therefore the most parts of the primary crystals are eluted with the elution solution. Thus, in some cases, the cavities become too large, making it difficult to sufficiently enlarge the surface area or making it difficult to maintain the porousness, which is not preferable.

Further, an element (third component) other than the "X" may be added to the Al-X based alloy as the precursor within the range of the eutectic composition as necessary or inevitably.

The general additive amount of the "X" in the precursor is equal to or less than the eutectic composition and 1 mass% or more, preferably 5 mass% or more, and more preferably 10 mass% or more. That is, when this amount of "X" is added, as described above, since an alloy phase containing a large amount of the additive component "X" is crystallized more on the outer periphery of the α phase, the additive component "X" is preferentially eluted. When a second phase is eluted, a desired porous structure (cavities) can be formed. The eutectic composition in the present invention is 35 mass%, which is the smallest amount of Mg in the phase diagram, in the case of an Al-Mg alloy, 15 mass% in the case of an Al-In alloy, and 36 mass% in the case of an Al-Zn alloy.

Further, since the second phase is preferentially eluted, the smaller the solidified cell composed of an α phase at the time of casting becomes, the larger the surface area can be made. Therefore, it is better to reduce the size of the solidified cell at the time of casting solidification. Generally, the more the additive amount of the additive component "X" is increased and the more the cooling rate at the temperature near the freezing point is increased, the smaller the solidified cell becomes, and the solidified cell changes from a granular (circular or elliptical) crystallized product to a dendrite having a complicated shape, so the surface area can be increased. For example, it is preferable that the cooling rate in the vicinity of the solidification point be adjusted to 1 °C/sec or more, preferably 5 °C/sec or more, and more preferably 10 °C/sec or more.

It is preferable to form a dendrite at least a part of the solidified cell of the α phase. More preferably, the entirety of the solidified cell is formed into a dendrite.

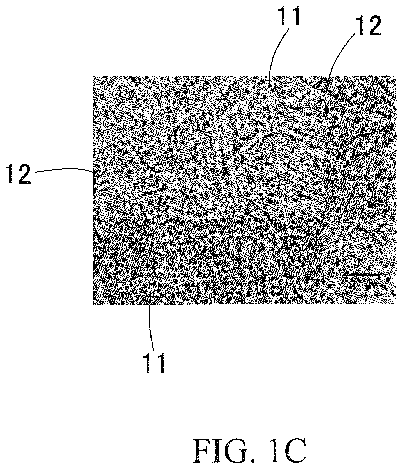

For example, as will be described later in the embodiment, as shown in FIG. 1C, in the porous aluminum object related to the present invention, the primary crystal α phases 11 (thin gray portions in the figure) are constituted by dendrites, and between the α phases 11, cavities 12 (dark gray portions in the figure) formed by elution of the second phase are continuously formed.

In cases where the solidified structure at the time of casting solidification remains in the aluminum alloy cast body as a precursor, it is acceptable to carry out moderate processing with a small deformation rate. For example, to the precursor, processing such as a drawing process and a rolling process for shaping the outer shape may be subjected.

However, if the precursor is subjected to processing with a large deformation rate, the solidified structure collapses, causing breakage of the crystallized product as a second phase. As a result, when the crystallized product is eluted, there is a possibility that desired cavities (porous structure) cannot be obtained.

The surface of the precursor (casting solidification surface) may remain as it is, but it is preferable to cut (remove) the casting solidification surface so that etching (eluting) of the second phase can be carried out quickly and uniformly.

In this embodiment, as the elution solution for eluting the additive component "X" of the precursor, an acid aqueous solution can be exemplified. The acid contained in the acid aqueous solution is preferably nitric acid or sulfuric acid in which Al is less likely to elute. Hydrochloric acid or the like can also be used.

The porous aluminum object obtained by treating the precursor with the elution solution can be used as an electrode material for a capacitor. When the porous aluminum object is used as an anode material for a capacitor, a dielectric film is formed on the anode body. The method of forming the dielectric film is not particularly limited, but it is preferable to apply a chemical conversion treatment by anodic oxidation.

As a chemical conversion pretreatment, a hydration treatment is generally carried out in pure water. Other than the above, as a method of performing the chemical conversion pretreatment, it is possible to perform, singularly or in combination, known pretreatment methods including immersion in hydrogen peroxide water, washing with an acid or alkaline processing solution, a vacuum or ambient heat treatment, a dechlorination treatment, a hydration treatment in an amine-added aqueous solution, a treatment with an acid or alkaline solution after formation of a thermal oxide film, and a hydration treatment to be performed after electrolytic etching on an aluminum foil.

For the chemical conversion treatment solution, any known solutions can be used, and an aqueous solution obtained by mixing one or more of boric acid, ammonium borate, adipic acid, ammonium adipate, phosphoric acid and a salt thereof, citric acid and a salt thereof, etc., can be exemplified.

The chemical conversion method can be exemplified by an EIAJ method, but not limited thereto. The chemical conversion treatment may be carried out a plurality of times, and according to a known method, the chemical conversion solution may be changed for each chemical conversion treatment, and a heat treatment or washing may be performed between a chemical conversion treatment and a chemical conversion treatment. Also, in cases where a plurality of chemical conversion treatments is performed, the formation voltage may be changed for each treatment.

In this embodiment, the precursor is formed in a cylindrical shape, but not limited thereto. In the present invention, the precursor may be formed in any shapes, such as, e.g., a cylindrical shape, an elliptical cylindrical shape, an elliptical cylindrical shape, a prismatic shape, a rectangular cylindrical shape, and a flattened shape such as a plate shape. For example, in order to effectively utilize the surface of the precursor to enlarge the surface area, it is advantageous to form the precursor in an elliptical shape or a flattened shape. Further, when the precursor is formed in a tubular shape having a hollow inner space, the precursor can also be preferentially eluted from the inner peripheral surface, so that a larger surface area can be obtained.

As a method of producing an aluminum alloy cast body as a precursor, for example, a method of casting an aluminum alloy molten metal of a predetermined alloy component in a mold having a shape close to a final shape and solidifying it, and then adjusting the shape by slightly scraping the surface can be suitably used.

Furthermore, in this embodiment, for example, a method of producing a precursor having an elliptical cross-sectional shape by compressing a round rod-shaped aluminum alloy cast body from above and below to such an extent that the solidified structure remains can be adopted.

In the above-described embodiment, the porous aluminum object as an anode body 1 constituting an aluminum electrolytic capacitor C1 is formed in a cylindrical shape, but not limited thereto. For example, as shown in FIG. 1B, an aluminum electrolytic capacitor C2 may be produced using an anode material 1 constituted by a cylindrical porous aluminum object.

As shown in the figure, in the capacitor C2 of this modified example, a separator 3 is attached to each of the outer peripheral surface and the inner peripheral surface of the cylindrical anode material 1, and a cathode body 2 is attached to each of the inside of the inner separator 3 and the outside of the outer separator 3.

In the capacitor C2 of this modified example, since a porous structure is formed on the inner peripheral surface of the anode material 1 in addition to the outer peripheral surface thereof, the surface area can be further increased, so the capacitance can be further increased.

Further, an aluminum electrolytic capacitor can also be produced by stacking a semiconductor layer and a conductor layer in order on a dielectric film.

The semiconductor layer can be formed by inorganic semiconductor such as manganese dioxide or organic semiconductor such as conductive polymer, and these can be generally produced by a known method. When a semiconductor layer is formed by a conductive polymer, for example, it can be formed using a chemical polymerization method and/or an electrolytic polymerization method. The solution for forming the semiconductor layer is not particularly limited as long as it can form a semiconductor by dipping and/or electrification. For example, a solution containing aniline, thiophene, pyrrole and their derivative substitutions (e.g., 3,4-ethylenedioxythiophene, etc.) and the like can be used. Further, a dopant may be further added to this solution. As the dopant, although not particularly limited, for example, arylsulfonic acid or a salt thereof, alkylsulfonic acid or a salt thereof, various polymer sulfonic acids or salts thereof, etc., can be used. By immersing and/or energizing, etc., using such a semiconductor layer forming solution, a semiconductor layer composed of a conductive polymer (for example, polyaniline, polythiophene, polypyrrole, polymethylpyrrole, derivatives thereof, etc.) can be formed on the dielectric layer.

As the conductor layer, for example, highly conductive carbon, silver, or the like can be used, and the conductive layer can be produced by solidifying pasty carbon or silver. They may be stacked.

### <Example 1-1>

A molten metal of Al-15 mass% Mg alloy was casted and solidified into a cylindrical shape (round bar) with a diameter of 10 mm at a cooling rate of 80 °C/sec to obtain a cast body. The cast body was lathed into 5 mm in diameter by 20 mm in length to obtain a round bar-shaped aluminum alloy cast body.

Subsequently, the aluminum alloy cast body as a precursor was degreased with ethanol and immersed in a nitric acid aqueous solution of 40 mass% concentration at room temperature for 6 hours, then washed with water and dried to obtain a porous aluminum object of the present invention.

FIG. 1C shows the optical micrograph showing the cross-section of the solidified structure in the precursor of this porous aluminum object. As shown in this figure, the α phase 11 (thin gray portion in the figure) of the primary crystal is formed into a dendrite, and the second phase 12 (dark gray portion in the figure) is continuously formed between the α phases 11.

Further, as a result of analyzing the porous aluminum object of the example, the depth (etching depth) of the cavities formed by elution of the second phase 12 was 0.085 mm from the surface of the porous material, and the width (pore size) of the cavities was 2 µm to 5 µm.

Next, a chemical conversion pretreatment was carried out by immersing the obtained porous aluminum object in boiling pure water for 5 minutes.

The porous aluminum object subjected to the chemical conversion pretreatment was immersed in 11 L of pure water to which 1,100 g of boric acid and 9.9 g of ammonium pentaborate octahydrate were added and held at 90°C, an initial current value of 500 mA/cm², and a constant voltage of 150 V for 10 minutes to perform a chemical conversion treatment.

The chemical conversion treated porous aluminum object was immersed in 360 ml of pure water to which 28.8 g of ammonium pentaborate octahydrate was added, and the capacitance was measured with the stainless steel container (area: 60 mm in bottom diameter by 150 mm in height) as an opposite electrode under the conditions of 30°C, the measurement frequency of 120 Hz, and the measurement voltage of 0.5 Vr.m.s. As a result, it was 8.64 µF.

### <Example 1-2>

A molten metal of Al-9 mass% Mg alloy was casted and solidified into a cylindrical shape (round bar) with a diameter of 10 mm at a cooling rate of 80°C/sec to obtain a cast body. The cast body was lathed into 5 mm in diameter by 20 mm in length to obtain a round bar-shaped aluminum alloy cast body.

Subsequently, the aluminum alloy cast body as a precursor was degreased with ethanol and immersed in an 8N nitric acid aqueous solution at 20°C for 6 hours, then washed with water and dried to obtain a porous aluminum object of the present invention.

Next, in the same manner as in Example 1-1, a chemical conversion pretreatment and a chemical conversion treatment were carried out, and the capacitance measurement was carried out in the same manner as in Example 1-1. As a result, it was 4.82 µF.

### <Example 1-3>

A molten metal of Al-13 mass% Mg alloy was casted and solidified into a cylindrical shape (round bar) with a diameter of 10 mm at a cooling rate of 30 °C/sec to obtain a cast body. The cast body was lathed into 5 mm in diameter by 20 mm in length to obtain a round bar-shaped aluminum alloy cast body.

Subsequently, the aluminum alloy cast body as a precursor was degreased with ethanol and immersed in an 8N nitric acid aqueous solution at 20°C for 6 hours, then washed with water and dried to obtain a porous aluminum object of the present invention.

Next, in the same manner as in Example 1-1, a chemical conversion pretreatment and a chemical conversion treatment were carried out, and the capacitance measurement was carried out. As a result, it was 5.60 µF.

### <Example 1-4>

A molten metal of Al-13 mass% Mg alloy was casted and solidified into a cylindrical shape (round bar) with a diameter of 10 mm at a cooling rate of 80 °C/sec to obtain a cast body. The cast body was lathed into 5 mm in diameter by 20 mm in length to obtain a round bar-shaped aluminum alloy cast body.

Subsequently, the aluminum alloy cast body as a precursor was degreased with ethanol and immersed in a 5N bydrochloric acid aqueous solution at 10°C for 24 hours, then washed with water and dried to obtain a porous aluminum object of the present invention.

Next, in the same manner as in Example 1-1, a chemical conversion pretreatment and a chemical conversion treatment were carried out, and the capacitance measurement was carried out. As a result, it was 7.00 µF.

### <Example 1-5>

A molten metal of Al-13 mass% Mg alloy was casted and solidified into a cylindrical shape (round bar) with a diameter of 10 mm at a cooling rate of 30 °C/sec to obtain a cast body. The cast body was lathed into 5 mm in diameter by 20 mm in length to obtain a round bar-shaped aluminum alloy cast body.

Subsequently, the aluminum alloy cast body as a precursor was degreased with ethanol and immersed in a 5N hydrochloric acid aqueous solution at 10°C for 24 hours, then washed with water and dried to obtain a porous aluminum object of the present invention.

Next, in the same manner as in Example 1-1, a chemical conversion pretreatment and a chemical conversion treatment were carried out, and the capacitance measurement was carried out. As a result, it was 5.02 µF.

### <Example 1-6>

A molten metal of Al-13 mass% Mg alloy was casted and solidified into a cylindrical shape (round bar) with a diameter of 10 mm at a cooling rate of 80 °C/sec to obtain a cast body. The cast body was lathed into 5 mm in diameter by 20 mm in length to obtain a round bar-shaped aluminum alloy cast body.

Subsequently, the aluminum alloy cast body as a precursor was degreased with ethanol and immersed in an aqueous solution containing a 5N hydrochloric acid and a 5N sulfuric acid at 10°C for 24 hours, then washed with water and dried to obtain a porous aluminum object of the present invention.

Next, in the same manner as in Example 1-1, a chemical conversion pretreatment and a chemical conversion treatment were carried out, and the capacitance measurement was carried out in the same method as in Example 1-1. As a result, it was 7.90 µF.

As described above, by bringing the second phase of the aluminum alloy cast body of a solidified structure having an α-Al phase and a second phase formed so as to be continuously intertwined with the α-Al phase by casting solidification of an aluminum alloy into contact with the elution solution, the second phase of the solidified structure is eluted, so that a porous aluminum object with a large number of cavities communicating from the surface to the inside can be obtained. As a result, an electrode material having a high capacitance can be obtained. The reason that the porous aluminum object after the chemical conversion treatment exhibits a high capacitance is that the porous aluminum object has a large surface area.

### <Second Embodiment>

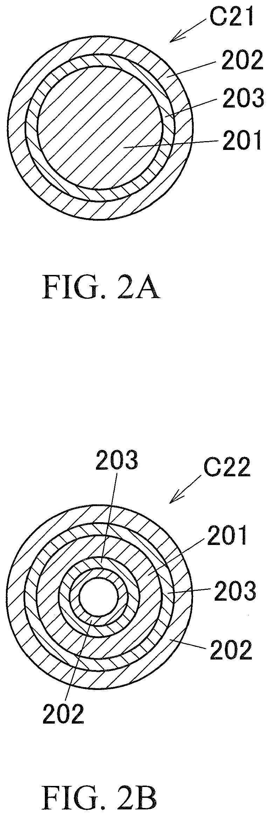

FIG. 2A is a cross-sectional view schematically showing an aluminum electrolytic capacitor C21 which is a second embodiment of the present invention. As shown in the figure, the capacitor C21 includes a cylindrical anode material 201 functioning as an anode, a sheet-like or film-like separator 203 wound on the outer periphery of the anode material 201, and a foil-like cathode body 202 wound on the outer periphery of the separator 203 and functioning as a cathode.

Conventionally well-known materials can be used for the separator 203 and the cathode material 202. On the other hand, a material specific to this embodiment is used for the anode material 201 as will be described later.

In general, an aluminum electrolytic capacitor is formed by sandwiching a dielectric film made of an aluminum oxide formed on an anode body of aluminum between an anode and a cathode opposed to the anode.

An aluminum electrolytic capacitor can be produced by forming a dielectric film on an anode material of a porous aluminum object according to the present invention and arranging a separator impregnated with a cathode electrolyte serving as a cathode on the dielectric film.

For the separator, any known materials such as a cellulose porous membrane can be used.

The electrolyte may be any known electrolytes. The electrolyte is generally composed of a cation component, an anion component, and a solvent. As the anion component, weak acids such as boric acid and carboxylic acid can be exemplified, and as the cation component, organic bases such as ammonia and amine can be exemplified. As the solvent, ethylene glycol and γ-butyrolactone can be exemplified. As the cathode, a conventional surface enlargement treated Al foil or the like can be used.

The anode material 201 to be obtained by the present invention is composed of a porous aluminum object (porous material). In this porous aluminum object, the precursor is an aluminum alloy cast body formed by casting solidification. The precursor is subjected to predetermined processing to produce an aluminum intermediate. The required part of the aluminum intermediate is eluted (etched) to obtain a porous aluminum object of the present invention having a large number of cavities (pores) opening to the surface and communicating from the surface to the inside.

The aluminum alloy as a precursor can be expressed as an Al-X based alloy in which "X" as an additive component (additive element) is added to Al (aluminum) as a principal component (remaining component).

The solidified structure of the precursor has an α phase (that is, α-Al phase) composed of a primary crystal and a second phase having an eutectic formed so as to be continuously intertwined with the α phase. The primary crystal denotes a first crystal produced from a molten metal in casting solidification. The second phase includes an eutectic of Al and the additive element "X". All of the second phases are substantially connected. However, any isolated second phases may remain within a range that does not impair the effects of the present invention.

Further, this precursor is immersed in a molten metal bath of "Y" as a bath component (bath metal element) to elute the "X", and a part, preferably all, of the "X" is replaced with the "Y" to obtain an aluminum intermediate of an Al-Y based alloy.

The metal structure of the aluminum intermediate includes a remaining phase corresponding to the α phase of the precursor and an elution phase corresponding to the second phase. When this aluminum intermediate is brought into contact with an elution solution capable of eluting the "Y", the bath component "Y" is preferentially eluted and the main part of the remaining phase corresponding to the α phase remains. On the other hand, at least a part, preferably all, of the elution phase corresponding to the second phase is eluted. As a result, in the aluminum intermediate, a large number of cavities (pores) communicating from the surface to the inside and continuously communicated with each other is formed. Thus, the porous aluminum object of this embodiment is obtained.

As the additive component "X", an element selected from the group consisting of Ca, Cu, Mg, Zn, Ni, Mn, Bi, In, and Sn can be exemplified. Among them, Mg can be exemplified as a preferred example since Mg has a melting point close to that of Al and is easy to handle. The additive component "X" is not limited to one kind, and two or more kinds may be added.

A part of the additive component "X" to be replaced may be replaced with the bath component "Y", or all of them may be replaced with the bath component "Y".

The bath component "Y" is a metal element having a melting point lower than that of Al and having a low solubility to the "Y" of Al, and is an element of a type different from the additive component "X" to be substituted. For example, at least one or more elements selected from Bi and In, i.e., Bi, In, and a low melting point materials obtained by combining these elements, can be exemplified. Particularly in this embodiment, Bi can be exemplified as a preferred example as the bath component "Y". The bath temperature is set to be lower than the melting point of the Al-X based alloy and higher than the melting point of the "Y". The bath temperature is set to about 400 to 500°C when using Bi as the bath component "Y", about 200 to 350°C when using In as the bath component "Y".

When immersing the precursor in the bath component "Y" to replace the additive component "X" with the bath component "Y", although it may be carried out in an atmospheric atmosphere, it is preferable to perform it in an oxidation-suppressing atmosphere containing a large amount of N₂, Ar, etc.

The Al-X based alloy constituting the precursor can also be regarded as a hypoeutectic composition which is an Al based alloy and the additive amount of "X" is equal to or less than the eutectic point. In the case of a hypoeutectic composition, an Al-rich alloy phase is crystallized in the solidified cell structure constituting the α phase, and an alloy phase (second phase) containing a large amount of the additive component "X" is crystallized in the final solidified part of the solidified cell formed on the outer periphery of the α phase. Next, when preparing the aluminum intermediate by replacing the additive component "X" of this precursor with the bath component "Y", an alloy phase (elution phase (corresponding to second phase)) containing a large amount of the bath component "Y" is formed on the outer periphery of the remaining phase (corresponding to the α phase) of the aluminum intermediate. For this reason, the bath component "Y" of the elution phase is preferentially eluted with the elution solution. As a result, the elution phase can be effectively eluted, so that the desired cavities can be reliably formed.

Although the α phase may sometimes be slightly eluted, it does not become a problem to the extent that the communicated cavities are formed and the shape of the porous material is maintained.

In cases where the precursor is a hypereutectic composition in which the additive amount of the "X" exceeds the eutectic point, the primary crystal becomes a crystallized product composed of the additive component "X" or an alloy phase containing a large amount of the additive component "X". In this case, a large part of the primary crystal will be eluted with the elution solution. Thus, in some cases, the cavities become too large, making it difficult to sufficiently enlarge the surface area or making it difficult to maintain the porousness, which is not preferable.

Further, in this embodiment, an element (third component) other than the "X" may be added to the Al-X based alloy as a precursor within the range of the eutectic composition as necessary or inevitably.

The general additive amount of the "X" in the precursor is equal to or less than the eutectic composition and 1 mass% or more, preferably 5 mass% or more, and more preferably 10 mass% or more. In other words, when this amount of the "X" is added, as described above, in the aluminum intermediate in which the additive component "X" was replaced with the bath component "Y", a large amount of the bath component "Y" exists on the outer periphery of the remaining phase (corresponding to the α phase). Thus, the bath component "Y" is preferentially eluted with the elution solution. As a result, when the elution phase is eluted, a desired porous structure (cavities) can be formed. The eutectic composition in the present invention is, for example, 35 mass%, which is the smallest amount of Mg in the phase diagram, in the case of an Al-Mg alloy, 15 mass% in the case of Al-In alloy, and 36 mass% in the case of an Al-Zn alloy.

Further, since the elution phase (corresponding to the second phase) formed so as to be intertwined with the remaining phase (corresponding to the α phase) is preferentially eluted, the smaller the solidified cell as the α phase at the time of casting solidification becomes, the larger the surface area of the obtained porous aluminum object can be made. For this reason, it is preferable to reduce the size of the solidified cell at the time of casting solidification. Generally, as the additive amount of the additive component "X" increases and as the cooling rate at the temperature near the freezing point increases, the solidified cell becomes smaller, and the solidified cell changes from a crystallized product of a granular or bulky shape, such as, e.g., a circular shape, an elliptic shape, and an oval shape, to a dendrite having a complicated shape, so the surface area can be increased. For example, it is preferable that the cooling rate in the vicinity of the solidification point be set to 1 °C/sec or more, preferably 5°C/sec or more, more preferably 10°C/sec or more.

It is preferable to form a dendrite in at least a part of the solidified cell of the α phase in the precursor, that is, at least a part of the cell of the remaining phase in the aluminum intermediate. More preferably, all of them are formed into a dendrite.

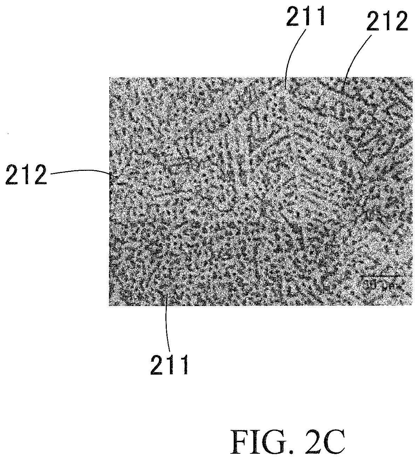

For example, as will be described later in the embodiment, as shown in FIG. 2C, in the precursor of the porous aluminum object related to the present invention, the α phase 211 as shown by the thin gray portion in the figure is constituted by a dendrite. Between the dendrites, the second phases 212 (dark gray portions in the figure) are continuously formed.

In this embodiment, provided that a solidified structure at the time of casting solidification remains in the aluminum alloy cast body as a precursor, it is acceptable to carry out moderate processing with a small deformation rate. For example, for the precursor, a process such as a drawing process and a rolling process for shaping the outer shape may be performed.

However, if the precursor is subjected to processing with a large deformation rate, the solidified structure may collapse, causing breakage of the crystallized product as the second phase. As a result, when the elution phase (corresponding to the second phase) of the aluminum intermediate is eluted, there is a possibility that desired cavities (porous structure) cannot be obtained.

The surface of the precursor (casting solidification surface) may remain as it is, but it is preferable to cut (remove) the casting solidification surface so that the replacement of the additive component "X" with the bath component "Y" can be carried out quickly and uniformly.

As the elution solution for eluting the bath component "Y" of the aluminum intermediate, an acid aqueous solution can be exemplified. The acid contained in the acid aqueous solution is preferably nitric acid or sulfuric acid in which Al is hardly eluted, and hydrochloric acid or the like can also be used.

The porous aluminum object obtained by treating the aluminum intermediate with the elution solution can be used as an electrode material for a capacitor. When the porous aluminum object is used as an anode material for a capacitor, a dielectric film is formed on the anode body. The method of forming the dielectric film is not particularly limited, but it is preferable to apply a chemical conversion treatment by anodic oxidation.

As a chemical conversion pretreatment, a hydration treatment is generally carried out in pure water. Other than the above, as a method of performing the chemical conversion pretreatment, it is possible to perform, singularly or in combination, known pretreatment methods including immersion in hydrogen peroxide water, washing with an acid or alkaline processing solution, a vacuum or ambient heat treatment, a dechlorination treatment, a hydration treatment in an amine-added aqueous solution, a treatment with an acid or alkaline solution after formation of a thermal oxide film, a hydration treatment to be performed after electrolytic etching on an aluminum foil.

Any known chemical solutions can be used for the chemical conversion treatment solution, and an aqueous solution obtained by mixing one or more of boric acid, ammonium borate, adipic acid, ammonium adipate, phosphoric acid and a salt thereof, citric acid and a salt thereof, etc., can be exemplified.

The chemical conversion method can be exemplified by an EIAJ method, but not limited thereto. The chemical conversion treatment may be carried out a plurality of times, and according to a known method, the chemical conversion solution may be changed for each chemical conversion treatment, and a heat treatment or washing may be performed between a chemical conversion treatment and a chemical conversion treatment. Also, in the case of performing a plurality of chemical conversion treatments, the formation voltage may be changed for each treatment.

The precursor and the aluminum intermediate each are formed in a cylindrical shape, but not limited thereto. In the present invention, the precursor and the aluminum intermediate each may be formed in any shapes, such as, e.g., a cylindrical shape, an elliptical cylindrical shape, an elliptical cylindrical shape, a prismatic shape, a rectangular cylindrical shape, and a flattened shape such as a plate shape. For example, in order to effectively utilize the surface of the precursor to enlarge the surface area, it is advantageous to form the precursor in an elliptical shape or a flattened shape. Further, when the precursor and the aluminum intermediate each are formed in a tubular shape having a hollow inner space, the precursor can also be preferentially eluted from the inner circumferential surface, so that a higher surface area can be obtained.

As a method of producing an aluminum alloy cast body as a precursor, for example, a method of casting an aluminum alloy molten metal of a predetermined alloy component in a mold having a shape close to a final shape and solidifying it, and then adjusting the shape by slightly scraping the surface can be suitably used.

Furthermore, it is possible to adopt a method of producing a precursor having an elliptical cross-sectional shape by compressing a round rod-shaped aluminum alloy cast body from above and below to such an extent that the solidified structure remains.

In the above-described embodiment, the porous aluminum object as the anode body 201 constituting an aluminum electrolytic capacitor C21 is formed in a cylindrical shape, but not limited thereto. For example, as shown in FIG. 2B, an aluminum electrolytic capacitor C22 may be produced using an anode material 201 constituted by a cylindrical porous aluminum object.

As shown in the figure, in the capacitor C22 of this modified example, a separator 203 is attached to each of the outer peripheral surface and the inner peripheral surface of the cylindrical anode material 201, and a cathode body 202 and 202 is attached to each of the inside of the inner separator 203 and the outside of the outer separator 203.

In the capacitor C22 of this modified example, since a porous structure is formed also on the inner peripheral surface of the anode material 201 in addition to the outer peripheral surface thereof, the surface area can be further increased, which in turn can further increase the capacitance.

Further, an aluminum electrolytic capacitor can also be produced by stacking a semiconductor layer and a conductor layer in order on a dielectric film.

The semiconductor layer can be formed by inorganic semiconductor such as manganese dioxide or organic semiconductor such as conductive polymer, and these can be generally produced by a known method. When the semiconductor layer is formed by a conductive polymer, for example, it can be formed using a chemical polymerization method and/or an electrolytic polymerization method. The solution for forming the semiconductor layer is not particularly limited provided that the solution can form a semiconductor by immersion and/or energization. For example, a solution containing aniline, thiophene, pyrrole and their derivative substitutions (e.g., 3,4-ethylenedioxythiophene, etc.) and the like can be used. Further, a dopant may be further added to this solution. As the dopant, although not particularly limited, for example, arylsulfonic acid or a salt thereof, alkylsulfonic acid or a salt thereof, various polymer sulfonic acids or salts thereof, etc., can be used. By immersing and/or energizing, etc., using such a semiconductor layer forming solution, a semiconductor layer composed of a conductive polymer (for example, polyaniline, polythiophene, polypyrrole, polymethylpyrrole, derivatives thereof, etc.) can be formed on the dielectric layer.

As the conductor layer, for example, highly conductive carbon, silver, or the like can be used, and the conductive layer can be produced by solidifying pasty carbon or silver. They may be stacked.

### <Example 2-2>

A molten metal of Al-15 mass% Mg alloy was casted and solidified into a cylindrical shape (round bar) with a diameter of 10 mm at a cooling rate of 80 °C/sec to obtain a cast body. The cast body was lathed into 5 mm in diameter by 20 mm in length to obtain a round bar-shaped aluminum alloy cast body. Thereafter, the aluminum intermediate was obtained by immersing the aluminum alloy cast body as a precursor in a Bi molten metal bath (500°C) as a bath component in the atmosphere for 1 minute. Subsequently, the aluminum intermediate was immersed in 40 mass% nitric acid at room temperature for 6 hours, then washed with water and dried to obtain a porous aluminum object of Example 2-1 related to the present invention.

FIG. 2C is the optical micrograph showing the cross-section of the solidified structure in a precursor of this porous aluminum object. As shown in this figure, the α phases 211 (thin gray portions in the figure) are formed in the dendrite, and the second phases 212 (dark gray portions in the figure) are continuously formed between the α phases 212.

Further, as a result of analyzing the porous aluminum object of this Example 2-1, the depth (etching depth) of the cavities formed by eluting the elution phase was 0.2 mm to 0.3 mm from the surface of the porous material, and the width (pore average diameter) of the cavities was 2 µm to 5 µm.

Next, a chemical conversion pretreatment was carried out by immersing the obtained porous aluminum object in boiling pure water for 5 minutes. The porous aluminum object subjected to the chemical conversion pretreatment was immersed in 11 L of pure water to which 1,100 g of boric acid and 9.9 g of ammonium pentaborate octahydrate were added and held at 90°C, an initial current value of 500 mA/cm², and a constant voltage of 150 V for 10 minutes to perform a chemical conversion treatment.

The chemical conversion treated porous aluminum object was immersed in 360 ml of pure water to which 28.8 g of ammonium pentaborate octahydrate was added, and the capacitance was measured with the stainless steel container (area: 60 mm in bottom diameter by 150 mm in height) as an opposite electrode under the conditions of 30°C, the measurement frequency of 120 Hz, and the measurement voltage of 0.5 Vr.m.s. As a result, it was 12.94 µF.

### <Example 2-2>

A porous aluminum object of Example 2-2 was obtained in the same manner as in Example 2-1 except that the cooling rate at the time of casting was set to 50 °C/sec and the immersion time of Bi in the aluminum intermediate in the molten metal bath was set to 5 minutes.

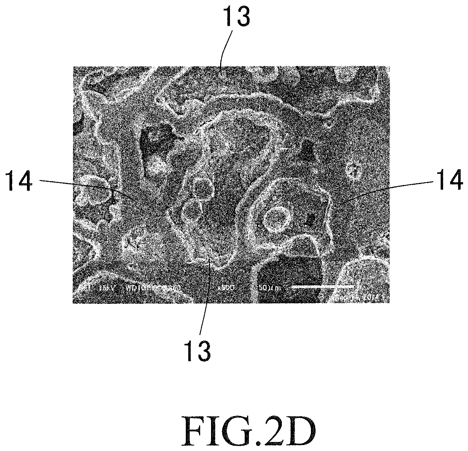

FIG. 2D is an SEM photograph showing the cross-section of the metal structure in the replica of the porous aluminum object of Example 2-2. The replica means an object obtained by forming an oxide film on the inner surface of the pores of the porous aluminum object and then eluting and removing the Al base material.

As shown in the figure, cavities (corresponding to the remaining phases) 213 after the remaining phase removal were formed, and between cavities 213 after the remaining phase removal, oxide films 214 (dark gray portions in the drawing) formed on the inner surfaces of the cavities (pores) were continuously formed.

Further, as a result of analyzing the porous aluminum object of this Example 2-2, the depth (etching depth) of the cavities after the elution phase removal was 0.35 mm to 0.5 mm from the surface of the porous material, and the width (pore average diameter) of the cavities was 10 µm.

In this Example 2-2, in the same manner as in Example 2-1, a chemical conversion pretreatment and a chemical conversion treatment were carried out, and the capacitance measurement was carried out. As a result, it was 6.12 µF.

### <Example 2-2>

A molten metal of Al-13 mass% Mg alloy was casted and solidified into a cylindrical shape (round bar) with a diameter of 10 mm at a cooling rate of 30 °C/sec to obtain a cast body. The cast body was lathed into 5 mm in diameter by 20 mm in length to obtain a round bar-shaped aluminum alloy cast body. Thereafter, the aluminum intermediate was obtained by immersing the aluminum alloy cast body as a precursor in a Bi molten metal bath (500°C) as a bath component in the atmosphere for 1 minute. Subsequently, the aluminum intermediate was immersed in 8N nitric acid aqueous solution at 20°C for 6 hours, then washed with water and dried to obtain a porous aluminum object of Example 2-3 related to the present invention.

In this Example 2-3, in the same manner as in Example 2-1, a chemical conversion pretreatment and a chemical conversion treatment were carried out, and the capacitance measurement was carried out. As a result, it was 8.70 µF.

### <Example 2-4>

A porous aluminum object of Example 2-4 related to the present invention was obtained in the same manner as in Example 2-3 except that the immersion time of Bi in the molten metal bath (500°C) was 5 minutes.

In this Example 2-4, in the same manner as in Example 2-1, a chemical conversion pretreatment and a chemical conversion treatment were carried out, and the capacitance measurement was carried out. As a result, it was 9.10 µF.

As described above, the aluminum alloy cast body of the solidified structure having the α-Al phase and the second phase formed so as to be continuously intertwined with the α-Al phase by casting solidification of an aluminum alloy is immersed in the molten bath of the bath component "Y" which is lower in melting point than that of "Al" to elute the element "X", and the element "X" is replaced with the "Y". Thus, an aluminum intermediate of the metal structure having the remaining phase corresponding to the α phase and the elution phase corresponding to the second phase is produced. Then, the aluminum intermediate is brought into contact with the elution solution capable of eluting the "Y" of the intermediate. With this, a porous aluminum object with a large number of cavities communicating from the surface to the inside can be produced. Therefore, an electrode material having a high capacitance can be obtained. The reason that the porous aluminum object after the chemical conversion treatment exhibits a high capacitance is that the porous aluminum object has a large surface area.

### Industrial Applicability

The method of producing a porous aluminum object of the present invention can be suitably used in producing an anode material for an aluminum electrolytic capacitor or an anode material for an aluminum solid electrolytic capacitor.

The present application claims priority to Japanese Patent Application No. 2015-40435 filed on March 2, 2015, Japanese Patent Application No. 2015-40437 filed on March 2, 2015, Japanese Patent Application No. 2016-39601 filed on March 2, 2016, and Japanese Patent Application No. 2016-39602 filed on March 2, 2016, the entire disclosure of each of which is incorporated herein by reference in its entirety.

It should be understood that the terms and expressions used herein are used for explanation and have no intention to be used to construe in a limited manner, do not eliminate any equivalents of features shown and mentioned herein, and allow various modifications falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. Limitations in the claims are to be interpreted broadly based on the language employed in the claims and not limited to examples described in the present specification or during the prosecution of the application, which examples are to be construed as non-exclusive.

### Description of Reference Symbols

- 1:: anode material (porous aluminum object)
- 2:: cathode material
- 3:: separator
- 11:: α phase
- 12:: second phase
- 201:: anode material (porous aluminum object)
- 202:: cathode material
- 203:: separator
- 211:: α phase
- 212:: second phase
- 213:: cavity after remaining phase removal
- 214:: aluminum electrolytic capacitor
- C1, C2:: aluminum electrolytic capacitor
- C21, C22:: aluminum electrolytic capacitor

## Claims

1. A method of producing a porous aluminum object, comprising:
a step of producing an aluminum alloy cast body having a solidified structure including an α-Al phase and a second phase formed so as to be continuously intertwined with the α-Al phase by casting solidification of an aluminum alloy; and
a step of producing an aluminum porous body having a large number of cavities communicating from a surface of the aluminum porous body to an inside thereof by bringing the aluminum alloy cast body as a precursor into contact with an elution solution capable of eluting the second phase to elute the second phase of the solidified structure in the precursor.

2. The method of producing a porous aluminum object as recited in claim 1,
wherein the α-Al phase contains a dendrite.

3. The method of producing a porous aluminum object as recited in claim 1 or 2, wherein
the aluminum alloy as the precursor is composed of an Al-X based alloy in which "X" as an additive component is added to "Al" as a principal component,
the "X" is an element exhibiting an eutectic reaction to the "Al", and
the Al-X based alloy as the precursor is an Al based alloy having a hypoeutectic composition in which an additive amount of the "X" is equal to or less than an eutectic point.

4. The method of producing a porous aluminum object as recited in claim 3,
wherein the "X is a metal less noble than the "Al".

5. The method of producing a porous aluminum object as recited in claim 4,
wherein the "X" is Mg.

6. The method of producing a porous aluminum object as recited in any one of claims 1 to 5,
wherein the elution solution is an acid aqueous solution.

7. The method of producing a porous aluminum object as recited in claim 6,
wherein the elution solution is an acidic aqueous solution containing at least one of nitric acid, sulfuric acid, and hydrochloric acid.

8. A method of producing an electrode material for a capacitor, comprising:
a step of producing an aluminum alloy cast body having a solidified structure including an α-Al phase and a second phase formed so as to be continuously intertwined with the α-Al phase by casting solidification of an aluminum alloy; and
a step of producing an aluminum porous body having a large number of cavities communicating from a surface of the aluminum porous body to an inside thereof by bringing the aluminum alloy cast body as a precursor into contact with an elution solution capable of eluting the second phase to elute the second phase of the solidified structure in the precursor.

9. The method of producing an electrode material for a capacitor as recited in claim 8,
wherein the α-Al phase contains a dendrite.

10. The method of producing an electrode material for a capacitor as recited in claim 8 or 9, wherein
the aluminum alloy as the precursor is composed of an Al-X based alloy in which "X" as an additive component is added to "Al" as a principal component,
the "X" is an element exhibiting an eutectic reaction to the "Al", and
the Al-X based alloy as the precursor is an Al based alloy having a hypoeutectic composition in which an additive amount of the "X" is equal to or less than an eutectic point.

11. The method of producing an electrode material for a capacitor as recited in claim 10,
wherein the "X" is a metal less noble than the "Al".

12. The method of producing an electrode material for a capacitor as recited in claim 11,
wherein the "X" is Mg.

13. The method of producing an electrode material for a capacitor as recited in any one claims 8 to 12,
wherein the elution solution is an acid aqueous solution.

14. The method of producing an electrode material for a capacitor as recited in claim 13,
wherein the elution solution is an acidic aqueous solution containing at least one of nitric acid, sulfuric acid, and hydrochloric acid.

15. A method of producing an electrode material for a capacitor **characterized by** subjecting a porous aluminum object obtained by the production method as recited in any one of claims 1 to 7 to a chemical conversion treatment to produce an electrode material for a capacitor.

16. A method of producing a capacitor **characterized in that** a capacitor is produced by using an electrode material for a capacitor obtained by the production method as recited in any one of claims 8 to 15.

17. A method of producing a capacitor **characterized in that** a capacitor in which the electrode material for a capacitor obtained by the production method as recited in claim 15 is used as an anode material is produced.

18. A porous aluminum object obtained by the production method as recited in any one of claims 1 to 7.

19. An electrode material for a capacitor obtained by the production method as recited in any one of claims 8 to 15.

20. A capacitor obtained by the production method as recited in claim 16 or 17.

21. A method of producing a porous aluminum object having a large number of cavities communicating from a surface of the porous aluminum object to an inside thereof, comprising:
a step of producing a precursor of a solidified structure configured by a cast body of an Al-X based alloy in which "X" as an additive component is added to "Al" and having an α-Al phase and a second phase formed so as to be intertwined with the α-Al phase;
a step of producing an aluminum intermediate having a metal structure including a remaining phase corresponding to the α-Al phase and an elution phase in which "X" in the second phase is replaced with a bath component "Y" having a melting point lower than that of an "Al-X based alloy" by immersing the precursor in a molten metal bath having the bath component "Y" to elute the "X" and replace the "X" with the "Y"; and
a step of eluting the elution phase in the aluminum intermediate with an elution solution capable of eluting the "Y".

22. The method of producing a porous aluminum object as recited in claim 21,
wherein the α-Al phase contains a dendrite.

23. The method of producing a porous aluminum object as recited in claim 21 or 22, wherein
the "X" is an element exhibiting an eutectic reaction to the "Al", and
the Al-X based alloy as the precursor is an Al based alloy having a hypoeutectic composition in which an additive amount of the "X" is in a range of an eutectic point or less.

24. The method of producing a porous aluminum object as recited in claim 23,
wherein the "X" is Mg.

25. The method of producing a porous aluminum object as recited in any one of claims 21 to 24,
wherein the bath component "Y" is an element of a type different from the "X" and is at least one element selected from Bi and In.

26. The method of producing a porous aluminum object as recited in any one of claims 21 to 25,
wherein the elution solution is an acid aqueous solution.

27. The method of producing a porous aluminum object as recited in claim 26,
wherein the elution solution is an aqueous solution containing nitric acid.

28. A method of producing an electrode material for a capacitor having a large number of cavities communicating from a surface of the electrode material to an inside thereof, comprising:
a step of producing a precursor of a solidified structure configured by a cast body of an Al-X based alloy in which "X" as an additive component is added to "Al" and having an α-Al phase and a second phase formed so as to be intertwined with the α-Al phase;
a step of producing an aluminum intermediate having a metal structure including a remaining phase corresponding to the α-Al phase and an elution phase in which "X" in the second phase is replaced with a bath component "Y" having a melting point lower than that of the "Al-X based alloy" by immersing the precursor in a molten metal bath having the bath component "Y" to elute the "X" and replace the "X" with the "Y"; and
a step of eluting the elution phase in the aluminum intermediate with an elution solution capable of eluting the "Y".

29. The method of producing an electrode material for a capacitor as recited in claim 28,
wherein the α-Al phase contains a dendrite.

30. The method of producing an electrode material for a capacitor as recited in claim 28 or 29, wherein
the "X" is an element exhibiting an eutectic reaction to the "Al", and
the Al-X based alloy as the precursor is an Al based alloy having a hypoeutectic composition in which an additive amount of the "X" is equal to or less than an eutectic point.

31. The method of producing an electrode material for a capacitor as recited in claim 30,
wherein the "X" is Mg.

32. The method of producing an electrode material for a capacitor as recited in any one of claims 28 or 31,
wherein the bath component "Y" is an element of a type different from the "X" and is at least one element selected from Bi and In.

33. The method of producing an electrode material for a capacitor as recited in any one of claims 28 or 32,
wherein the elution solution is an acid aqueous solution.

34. The method of producing a porous aluminum object as recited in claim 33,
wherein the elution solution is an aqueous solution containing nitric acid.

35. A method of producing an electrode material for a capacitor **characterized by** producing an electrode material for a capacitor by subjecting a porous aluminum object obtained by the production method as recited in any one of claims 21 to 27 to a chemical conversion treatment.

36. A method of producing a capacitor **characterized by** producing a capacitor using an electrode material for a capacitor obtained by the production method as recited in any one of claims 28 to 35.

37. A method of producing a capacitor **characterized by** producing a capacitor in which an electrode material for a capacitor obtained by the production method as recited in claim 35 is used as an anode material.

38. A porous aluminum object **characterized by** being obtained by the production method as recited in any one of claims 21 to 27.

39. An electrode material for a capacitor **characterized by** being obtained by the production method as recited in any one of claims 28 to 35.

40. A capacitor **characterized by** being obtained by the production method as recited in claim 36 or 37.
